(19) Europäisches Patentamt
European Patent Office
Office européen des brevets

(11) Veröffentlichungsnummer: **0 042 359**
**B1**

(12) # EUROPÄISCHE PATENTSCHRIFT

(45) Veröffentlichungstag der Patentschrift: **31.10.84**

(51) Int. Cl.³: **C 07 F 9/48,** C 07 F 9/65, C 08 K 5/53, C 08 L 23/00

(21) Anmeldenummer: **81810234.5**

(22) Anmeldetag: **10.06.81**

(54) **Phosphonigsäure-monoester-monoamide und damit stabilisierte organische Polymere.**

(30) Priorität: **16.06.80 CH 4617/80**

(43) Veröffentlichungstag der Anmeldung: **23.12.81 Patentblatt 81/51**

(45) Bekanntmachung des Hinweises auf die Patenterteilung: **31.10.84 Patentblatt 84/44**

(84) Benannte Vertragsstaaten: **DE FR GB IT**

(56) Entgegenhaltungen:
**EP - A - 0 005 441**
**EP - A - 0 005 447**
**DE - A - 2 113 380**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Rasberger, Michael, Dr., Waltersgrabenweg 6, CH-4125 Riehen (CH)**

EP 0 042 359 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft neue Phosphonigsäuremonoester-monoamide, deren Herstellung sowie mit deren Hilfe stabilisiertes organisches polymeres Material.

Es ist bekannt, Phosphonigsäure-Derivate als Stabilisatoren zum Schützen von organischem Material gegen die schädigende Wirkung von Hitze, Sauerstoff und Licht einzusetzen. So sind in der DE-OS 2 113 380 u. a. Phosphonigsäurediamide und in der EP Anm. 5 447 Phosphonigsäurediester als Stabilisatoren für organisches Material beschrieben worden.

Die vorliegende Erfindung betrifft Phosphonigsäure-monoester-monoamide (im Folgenden als Phosphonigsäure-esteramide bezeichnet), welche ausgezeichnete Eigenschaften bezüglich Verarbeitungsstabilisierung, Lagerstabilität, Wasseraufnahme, Hydrolyseempfindlichkeit, Farbverhalten, Flüchtigkeit, Migrationsverhalten, Verträglichkeit und Lichtschutzverbesserung besitzen.

Die neuen Verbindungen entsprechen der Formel I

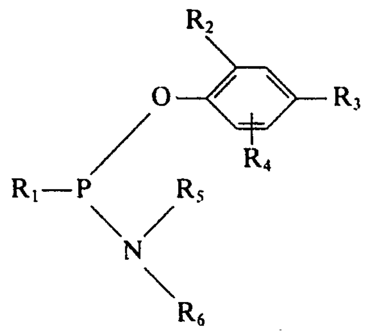

(I)

worin $R_1$ $C_1-C_{18}$ Alkyl, Styryl, Biphenylyl oder Phenyl, welches mit einer bis drei $C_1-C_{18}$ Alkylgruppen und/oder einer Dialkyl $(C_1-C_{12})$-aminogruppe in 4-Stellung substituiert sein kann, bedeutet, und $R_2$ und $R_4$ unabhängig voneinander $C_1-C_{18}$ Alkyl, $C_5-C_{12}$ Cycloalkyl, Phenyl, Benzyl, $\alpha$-Methylbenzyl oder $\alpha,\alpha$-Dimethylbenzyl sind, und $R_4$ ferner Wasserstoff ist, und $R_3$ Wasserstoff, $C_1-C_{18}$ Alkyl, $C_1-C_{18}$ Alkoxy, $C_2-C_{19}$ Alkoxycarbonyl, $C_3-C_{24}$ Alkoxycarbonylalkyl, oder gegebenenfalls mit einer bis drei $C_1-C_8$ Alkylgruppen substituiertes Phenoxycarbonyl oder $C_8-C_{16}$ Phenoxycarbonylalkyl ist oder $R_3$ ferner Phenyl, Benzyl, $\alpha$-Methylbenzyl, $\alpha,\alpha$-Dimethylbenzyl oder eine der Gruppen II oder III

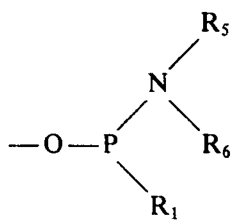

(II)

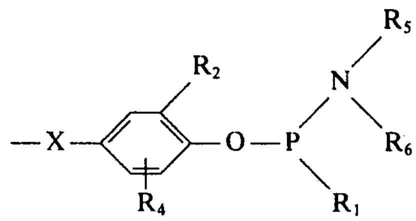

(III)

bedeutet, worin X $-O-$, $-S-$ oder $-(R_7)C(R_8)-$ bedeutet, wobei $R_7$ und $R_8$ unabhängig voneinander Wasserstoff oder $C_1-C_8$ Alkyl sind, und ferner $R_3$ und $R_4$ zusammen ein in 4- und 5-Stellung ankondensierter 1,1,3,3-Tetramethyl-trimethylen-1,3-Rest sind, und $R_5$ und $R_6$ unabhängig voneinander $C_1-C_{22}$ Alkyl, $C_2-C_{21}$ Oxaalkyl, $C_2-C_{21}$ Thiaalkyl, $C_3-C_{18}$ Alkenyl, $C_3-C_{18}$ Alkinyl, $C_2-C_6$ Hydroxyalkyl, $C_3-C_{24}$ Alkoxycarbonylalkyl, $C_5-C_{12}$ Cycloalkyl, $C_6-C_{14}$ Aryl, $C_7-C_{15}$ Alkaryl, $C_7-C_{15}$ Aralkyl oder eine Piperidin-4-ylgruppe der Formel IX bedeuten

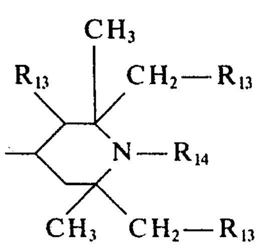

(IX)

worin $R_{13}$ Wasserstoff oder Methyl bedeutet, und $R_{14}$ Wasserstoff, Oxyl, $C_1-C_{18}$ Alkyl, $C_3-C_8$ Alkenyl, $C_3-C_6$ Alkinyl, $C_7-C_{12}$ Aralkyl, $C_2-C_{21}$ Alkoxyalkyl, eine aliphatische Acylgruppe mit 1–4 C-Atomen oder eine Gruppe $-CH_2COOR_{15}$ ist, wobei $R_{15}$ $C_1-C_{12}$ Alkyl, $C_3-C_8$ Alkenyl, Phenyl, $C_7-C_8$ Aralkyl oder Cyclohexyl bedeutet, und $R_5$ ferner Wasserstoff oder eine Gruppe der Formel

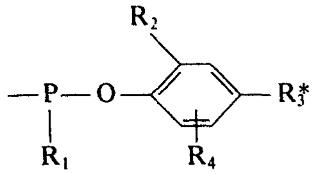

(IV)

ist, worin $R_1$, $R_2$ und $R_4$ die oben angegebene Bedeutung haben, und $R_3^*$ die Bedeutung von $R_3$ mit Ausnahme der Gruppen der Formeln II und III hat, und $R_6$ ferner eine der Gruppen V oder VI

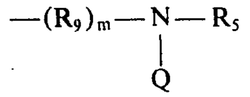

(V)

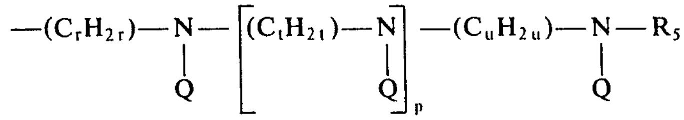

(VI)

bedeutet, worin Q eine Gruppe der Formel IV ist, worin $R_1$, $R_2$, $R_3^*$ und $R_4$ die oben angegebene Bedeutung haben, und m Null oder 1 ist, und $R_9$ gegebenenfalls mit einem oder zwei Sauerstoff- oder Schwefelatomen unterbrochenes $C_2-C_{22}$ Alkylen, $C_4-C_{22}$ Alkenylen, $C_4-C_{22}$ Alkinylen, $C_5-C_9$ Cycloalkylen oder eine Gruppe der Formel VII

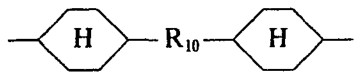

(VII)

ist, worin $R_{10}$ $-O-$, $-S-$ oder $-(R_{11})C(R_{12})$ bedeutet wobei $R_{11}$ und $R_{12}$ unabhängig voneinander Wasserstoff oder $C_1-C_8$ Alkyl sind, oder $R_{11}$ und $R_{12}$ zusammen mit dem C-Atom, an welches sie gebunden sind, $C_5-C_{12}$ Cycloalkyl ergeben oder $R_{11}$ und $R_{12}$ zusammen 1,4-Cyclohexylendimethylen oder 1,3,3-Trimethylcyclohexylen-1,5 bedeuten und $R_9$ ferner Phenylen oder Biphenylen bedeutet, und r, t und u unabhängig voneinander 2, 3, 4, 5 oder 6 sind, und p Null, 1, 2 oder 3 ist und ferner $R_5$ und $R_6$ in der Formel I zusammen mit dem N-Atom, an das sie gebunden sind, gegebenenfalls durch 1–5 Methyl- oder Äthylgruppen substituiertes Pyrrolidin, Oxazolidin, Piperidin, Morpholin, Piperazin, Hexamethylenimin oder eine Gruppe der Formel VIII

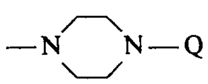

VIII

bilden.

Bedeuten $R_1$, $R_2$, $R_3$ und $R_4$ $C_1-C_{18}$ Alkyl, so handelt es sich dabei beispielsweise um Methyl, Äthyl, n-Propyl, iso-Propyl, n-Butyl, sec.Butyl, t.Butyl, n-Pentyl, t.Amyl, n-Hexyl, 2-Methylpentyl, 2,4-Dimethylpentyl, n-Octyl, 6-Methylheptyl, 2-Äthylhexyl, 1,1,3,3-Tetramethylbutyl, geradkettiges oder verzweigtes Nonyl, Decyl, Dodecyl, Tridecyl, Tetradecyl, Hexadecyl oder Octadexyl. Die bevorzugte Bedeutung von $R_2$ als Alkyl ist $C_1-C_8$ Alkyl und insbesondere tertiäres $C_4-C_8$ Alkyl, wie t.Butyl, t.Amyl oder 1,1,3,3-Tetramethylbutyl. $R_3$ als Alkyl ist bevorzugt $C_1-C_{12}$ und insbesondere $C_1-C_8$ Alkyl. $R_4$ als Alkyl besitzt bevorzugt 1–8 C-Atome.

Ist $R_1$ Phenyl, so kann dieser mit einer bis drei $C_1-C_8$ Alkylgruppen, und bevorzugt mit einer bis drei $C_1-C_4$ Alkylgruppen substituiert sein. Beispiele dafür sind o-Tolyl, m-Tolyl, p-Tolyl, o-Xylyl, m-Xylyl, p-Xylyl, Mesityl, o-Cumyl, p-t.Butylphenyl, 2,4-Di-t.butylphenyl, 2,4,6-Tri-t.butylphenyl oder 2,4-Di(1,1,3,3-tetramethylbutyl)phenyl. $R_1$ kann als Phenyl auch in 4-Stellung mit einer Dialkyl($C_1-C_{12}$)-aminogruppe substituiert sein. Beispielhaft sind 4-Dimethylaminophenyl, 4-Diäthylaminophenyl, 4-Diisopropylaminophenyl, Di-n-butylaminophenyl, Di-n-octylaminophenyl, Di-(2-äthylhexyl)aminophenyl oder Di-n-dodecylaminophenyl. Bevorzugt sind Alkylgruppen mit 1–4 C-Atomen. In besonders bevorzugten Verbindungen bedeutet $R_1$ $C_1-C_{18}$ Alkyl oder Phenyl.

Sind $R_2$, $R_4$, $R_5$ und $R_6$ $C_5-C_{12}$, und insbesondere $C_5-C_7$ Cycloalkyl, so kann es sich um Cyclopentyl, Cycloheptyl, Cyclooctyl, Cyclononyl, Cyclododecyl und insbesondere um Cyclohexyl handeln.

Eine weitere bevorzugte Bedeutung von $R_2$ ist Phenyl und Benzyl, und insbesondere $\alpha$-Methylbenzyl und $\alpha,\alpha$-Dimethylbenzyl. In bevorzugten Verbindungen ist $R_4$ Wasserstoff oder $C_1-C_8$ Alkyl, welches bevorzugt in 6-Stellung ist.

Ist der Substituent $R_3$ $C_1-C_{18}$, bevorzugt $C_1-C_8$ Alkoxy, so handelt es sich dabei z.B. um Methoxy, Äthoxy, iso-Propoxy, iso-Butoxy, n-Butoxy, t.-Butoxy, n-Hexyloxy, geradkettiges oder verzweigtes Octyloxy, Dodecyloxy oder Octadecyloxy.

$R_3$ kann als $C_2-C_{19}$ Alkoxycarbonyl z.B. Methoxycarbonyl, Äthoxycarbonyl, iso-Propoxycarbonyl, n-Butoxycarbonyl, geradkettiges oder verzweigtes Octoxycarbonyl, Dodecyloxycarbonyl, Tetradecyloxycarbonyl oder Octadecyloxycarbonyl sein.

Sind $R_3$, $R_5$ und $R_6$ $C_3-C_{24}$ Alkoxycarbonylalkyl, bevorzugt $C_3-C_{20}$ Alkoxycarbonylmethyl oder $C_4-C_{21}$ Alkoxycarbonyläthyl, so sind als Beispiele Methoxycarbonylmethyl, Methoxycarbonyläthyl, Äthoxycarbonylpropyl, Octyloxycarbonylbutyl, Dodecycloxycarbonyläthyl, Octadecycloxycarbonylmethyl oder Octadodecyloxycarbonyläthyl zu nennen.

$R_3$ als Phenoxycarbonyl kann mit einer bis drei $C_1-C_8$ Alkylgruppen substituiert sein. Beispiele dafür sind o-Tolyloxycarbonyl, m-Tolyloxycarbonyl, o-Xylyloxycarbonyl, p-Xylyloxycarbonyl, Mesityloxycarbonyl, o-Cumyloxycarbonyl, p-t.Butylphenyloxycarbonyl, 2,4-Di-t-butylphenyloxycarbonyl, 2,4,6-Tri-t.butylphenyloxycarbonyl, 2,4-Di-(1,1,3,3-tetramethylbutyl)phenyloxycarbonyl oder 2,4-Di-isopropylphenyloxycarbonyl.

Ist $R_3$ $C_8-C_{16}$ Phenyloxycarbonylalkyl, so handelt es sich beispielsweise um Phenyloxycarbonylmethyl, Phenyloxycarbonyläthyl, Phenyloxycarbonylpropyl, Phenyloxycarbonylhexyl, Phenyloxycarbonyloctyl oder Phenyloxycarbonylnonyl. Diese Gruppen können im Phenylteil mit einer bis drei $C_1-C_8$ Alkylgruppen substituiert sein. Beispiele dafür sind o-Tolyloxycarbonylmethyl, o-Xylyloxycarbonylpropyl, Mesityloxycarbonyläthyl, 2,4,6-Tri-isopropylphenyloxycarbonylpropyl, 2,4-Di-(1,1,3,3-tetramethylbutylphenyl)-oxycarbonylmethyl oder 2,4-Di-t.butylphenyloxycarbonyloctyl.

Eine weitere bevorzugte Bedeutung von $R_3$ ist Phenyl oder Benzyl, und insbesondere $\alpha$-Methylbenzyl oder $\alpha,\alpha$-Dimethylphenyl.

Bedeutet $R_3$ eine der Gruppen der Formeln II oder III, so haben die darin vorkommenden Substituenten $R_1$, $R_2$, $R_4$, $R_5$ und $R_6$ bevorzugt die gleiche Bedeutung wie die entsprechenden Reste in der Formel I.

X bedeutet $-O-$ oder $-S-$ und bevorzugt eine Gruppe $-(R_7)C(R_8)-$.

$R_7$ $R_8$, $R_{11}$ und $R_{12}$ sind als $C_1-C_8$ Alkyl beispielsweise Methyl, Äthyl, n-Propyl, n-Butyl, n-Hexyl, n-Octyl oder 2-Äthylhexyl. Bevorzugt bedeuten $R_7$ und $R_8$ Wasserstoff oder Methyl.

Bedeuten $R_5$ und $R_6$ $C_1-C_{22}$ Alkyl, so können sie eine für $R_1$, $R_2$, $R_3$ und $R_4$ oben angegebene Bedeutung haben, oder außerdem geradkettiges oder verzweigtes Nonadecyl, Eicosyl, Heneicosyl oder Docosyl bedeuten. Bevorzugt sind $C_1-C_{18}$ und insbesondere $C_1-C_{12}$ Alkylgruppen.

$R_5$ und $R_6$ sind als $C_2-C_{21}$ Oxa- oder Thiaalkyl beispielsweise Methoxymethyl, Methylthiomethyl, Äthoxymethyl, Methylthioäthyl oder Äthoxyäthyl. Bevorzugt sind Alkoxypropyl- und Alkylthiopropylgruppen, wie Methoxypropyl, Äthylthiopropyl, Butoxypropyl, Octylthiopropyl, Dodecyloxypropyl, Octadecylthiopropyl oder Octadecyloxypropyl.

$R_5$ und $R_6$ sind als $C_3-C_{18}$ Alkenyl beispielsweise Allyl, Methallyl, n-Hex-3-enyl, n-Oct-4-enyl, n-Undec-10-enyl oder n-Octadec-17-enyl. Bevorzugt sind Allyl und Methallyl, und insbesondere Allyl.

$R_5$ und $R_6$ sind als $C_3-C_{18}$ Alkinyl z.B. Propargyl, n-But-1-inyl, n-But-2-inyl oder n-Hex-1-inyl. Bevorzugt sind Alkinylgruppen mit 3 oder 4 C-Atomen und insbesondere Propargyl.

Bedeuten $R_5$ und $R_6$ Hydroxyalkyl mit 1–6 C-Atomen, so kann es sich dabei um 2-Hydroxypropyl, 2-Hydroxyäthyl, 3-Hydroxypropyl, 4-Hydroxybutyl oder 6-Hydroxyhexyl handeln.

$R_5$ und $R_6$ sind als $C_6-C_{14}$ Aryl z.B. Phenyl, $\alpha$-Naphthyl, $\beta$-Naphthyl oder Phenanthryl. Bevorzugt werden Phenylgruppen.

Bedeuten $R_5$ und $R_6$ Aralkyl mit 7–15 C-Atomen, so handelt es sich z.B. um Benzyl, $\alpha$-Phenyläthyl, $\alpha,\alpha$-Dimethylbenzyl oder um 2-Phenyläthyl, bevorzugt um Benzyl.

$R_5$ und $R_6$ können als $C_7-C_{15}$ Alkarylgruppen beispielsweise o-Tolyl, m-Tolyl, p-Tolyl, o-Xylyl, m-Xylyl, p-Xylyl, Mesityl, 2,6-Diäthylphenyl, 2,4,6-Triisopropylphenyl oder 4-t.Butylphenyl sein.

In besonders bevorzugten Verbindungen bedeutet nur einer der Reste $R_5$ oder $R_6$ eine Gruppe der Formel IX, und der andere Wasserstoff.

Ganz besonders bevorzugte Piperidin-4-yl-reste sind solche, worin $R_{13}$ Wasserstoff und $R_{14}$ Wasserstoff, Methyl oder Acetyl bedeutet.

Die bevorzugte Bedeutung von $R_{13}$ ist Wasserstoff.

$R_{14}$ ist als $C_1-C_{18}$ Alkyl z.B. Methyl, Äthyl, n-Propyl, n-Butyl, n-Pentyl, n-Octyl, n-Decyl, n-Dodecyl oder Octadecyl. Bevorzugt sind Alkylgruppen mit 1 bis 12, ferner solche mit 1 bis 8, insbesondere solche mit 1 bis 4 Kohlenstoffatomen und vor allem Methyl.

$R_{14}$ ist als $C_3-C_8$ Alkenyl beispielsweise Allyl, 3-Methyl-2-butenyl, 2-Butenyl, 2-Hexenyl oder 2-Octenyl, insbesondere Allyl.

$R_{14}$ ist als $C_3-C_6$ Alkinyl z.B. Propargyl.

$R_{14}$ ist als $C_7-C_{12}$ Aralkyl z.B. Benzyl, $\beta$-Phenyläthyl oder 4-tert.Butyl-benzyl, bevorzugt Benzyl.

Bedeutet $R_{14}$ $C_2-C_{21}$ Alkoxyalkyl, so kann der Alkylteil 1 bis 3 Kohlenstoffatome enthalten und der Alkoxyteil aus 1 bis 18 Kohlenstoffatomen bestehen, wie z.B. in Methoxymethyl, Äthoxymethyl, 2-Methoxyäthyl, 2-Äthoxyäthyl, 2-n-Butoxyäthyl, 3-n-Butoxypropyl, 2-Octoxyäthyl oder 2-Octadecyloxyäthyl; insbesondere zu erwähnen sind Verbindungen, in den $R_{14}$ eine Alkoxyalkylgruppe mit 2 bis 6 Kohlenstoffatomen bedeutet.

$R_{14}$ ist als aliphatische Acylgruppe mit 1 bis 4 Kohlenstoffatomen, beispielsweise Formyl, Acetyl, Acryloyl oder Crotonoyl, insbesondere Acetyl.

Ist $R_{14}$ die Gruppe $-CH_2COOR_{15}$ so bedeutet $R_{15}$ als $C_1-C_{12}$ Alkyl, z. B. Methyl, Äthyl, Isopropyl, n-Butyl, Isobutyl, t-Butyl, Isopentyl, n-Octyl oder n-Dodecyl. Bevorzugt ist $R_{15}$ $C_1-C_4$ Alkyl. $R_{15}$ ist als $C_3-C_8$ Alkenyl z. B. Allyl, 2-Butenyl oder 2-Hexenyl. $R_{15}$ ist als $C_7-C_8$ Aralkyl z. B. Benzyl oder $\alpha$-Phenyläthyl.

Bedeutet $R_5$ eine Gruppe der Formel IV, so besitzen die Substituenten $R_1$, $R_2$ und $R_4$ vorzugsweise die gleiche Bedeutung wie die entsprechenden Reste in der Formel I. $R_3^*$ ist bevorzugt ebenfalls identisch mit der Bedeutung von $R_3$ in der Formel I, mit Ausnahme, daß $R_3^*$ nicht eine Gruppe der Formel II oder III ist. Das gleiche gilt für $R_6$ in der Bedeutung einer Gruppe der Formel V oder VI, worin ja Q einer Gruppe der Formel IV entspricht. $R_5$ in der Formel V und VI hat in bevorzugten Verbindungen die identische Bedeutung wie $R_5$ in der Formel I.

r, t und u sind unabhängig voneinander 2, 3, 4, 5 oder 6, bevorzugt besitzen sie den gleichen Wert und bedeuten insbesondere 2 oder 3.

p ist Null, 1, 2 oder 3, bevorzugt Null oder 1 und insbesondere Null.

m kann Null oder bevorzugt 1 sein.

$R_9$ kann als $C_2-C_{22}$ Alkylen, bevorzugt $C_2-C_9$ und insbesondere $C_2-C_6$ Alkylen beispielsweise Dimethylen, Trimethylen, Tetramethylen, Hexamethylen, Octamethylen, Nonamethylen, 2,2,4-Trimethylhexamethylen, Decamethylen, Dodecamethylen, Octadecamethylen oder Docosamethylen sein. Sind die Alkylengruppen gegebenenfalls mit einem oder zwei Sauerstoff- oder Schwefelatomen unterbrochen, so kann es sich dabei um 2-Thiapropylen-1,3, 3-Thia-pentylen-1,5, 4-Oxaheptamethylen oder 3,6-Dioxaoctylen-1,8 handeln.

Ist $R_9$ $C_4-C_{22}$ Alkenylen oder Alkinylen, so handelt es sich dabei beispielsweise um 2-Butenylen-1,4; 2-Butinylen-1,4; 2,4-Hexadiinylen-1,6 oder um Propenylen-1,3 handeln.

$R_9$ ist als $C_5-C_9$ Cycloalkylen beispielsweise 1,2-Cyclopentylen, 1,2-Cyclohexylen, 1,3-Cyclohexylen, 1,4-Cyclohexylen, 1,4-Cycloheptylen oder 1,2-Cyclononylen. Bevorzugt besitzt $R_9$ als Cycloalkylen 6 C-Atome.

$R_{11}$ und $R_{12}$ können zusammen mit dem C-Atom, an das sie gebunden sind, $C_5-C_{12}$ Cycloalkyl bilden. Es handelt sich dabei z. B. um Cyclopentyl, Cycloheptyl, Cyclooctyl, Cyclononyl, Cyclododecyl und insbesondere um Cyclohexyl.

Bilden $R_5$ und $R_6$ mit dem N-Atom, an das sie gebunden sind, einen Pyrrolidin-, Oxazolidin-, Piperidin-, Morpholin-, Hexamethylenimin- oder Piperazinring, so können diese Heterocyclen mit einer bis fünf Methyl- oder Äthylgruppen substituiert sein. Bevorzugt sind diese Ringsysteme unsubstituiert.

Bevorzugt werden Verbindungen der Formel I, worin $R_1$ $C_1-C_{18}$ Alkyl, Styryl, oder Phenyl, welches mit einer bis drei $C_1-C_4$ Alkylgruppen und/oder einer Dialkyl($C_1-C_4$)-aminogruppe in 4-Stellung substituiert sein kann, bedeutet und $R_2$ und $R_4$ unabhängig voneinander $C_1-C_8$ Alkyl, $C_5-C_7$ Cycloalkyl, Phenyl, Benzyl, $\alpha$-Methylbenzyl, oder $\alpha,\alpha$-Dimethylbenzyl sind, und $R_4$ ferner Wasserstoff ist, und $R_3$ Wasserstoff, $C_1-C_{12}$ Alkyl, $C_1-C_8$ Alkoxy, $C_2-C_{19}$ Alkoxycarbonyl, $C_3-C_{20}$ Alkoxycarbonylmethyl, $C_4-C_{21}$ Alkoxycarbonyläthyl, Phenyl, Benzyl, $\alpha$-Methylbenzyl, $\alpha,\alpha$-Dimethylbenzyl oder eine der Gruppen II oder III ist, worin $R_1$, $R_2$ und $R_4$ die oben angegebene Bedeutung haben, und $R_5$ und $R_6$ wie untenstehend definiert sind, und X eine Gruppe der Formel $-(R_7)C(R_8)-$ bedeutet, worin $R_7$ und $R_8$ unabhängig voneinander Wasserstoff oder Methyl sind, und ferner $R_3$ und $R_4$ zusammen ein in 4- und 5-Stellung ankondensierter 1,1,3,3-Tetramethyl-trimethylen-1,3-Rest sind, und $R_5$ und $R_6$ unabhängig voneinander $C_1-C_{18}$ Alkyl, $C_3-C_4$ Alkenyl, $C_3-C_4$ Alkinyl, $C_3-C_{20}$ Alkoxycarbonylmethyl, $C_4-C_{21}$ Alkoxycarbonyläthyl, $C_5-C_7$ Cycloalkyl, Phenyl, $C_7-C_{15}$ Alkaryl, Benzyl oder eine Piperidin-4-ylgruppe der Formel IX bedeuten, und $R_5$ ferner Wasserstoff und $R_6$ ferner eine Gruppe der Formel V oder VI ist, worin r, t und u 2 oder 3 sind und p Null oder 1 ist und $R_5$ und $R_6$ ferner zusammen mit dem N-Atom, an welches sie gebunden sind, Pyrrolidin, Oxazolidin, Piperidin, Morpholin, Piperazin, Hexamethylenimin oder eine Gruppe der Formel VIII bilden und $R_9$ gegebenenfalls mit einem oder zwei Sauerstoff- oder Schwefelatom unterbrochenes $C_2-C_9$ Alkylen, Cyclohexylen oder eine Gruppe der Formel VII ist, wobei $R_{10}$ $-O-$, $-S-$ oder $-(R_{11})C(R_{12})-$ ist, und $R_{11}$ und $R_{12}$ unabhängig voneinander Wasserstoff oder Methyl sind, oder $R_{11}$ und $R_{12}$ zusammen mit dem C-Atom, an welches sie gebunden sind, Cyclohexylen, 1,4-Cyclohexyldimethylen oder 1,3,3-Trimethylcyclohexylen-1,5 sind, und $R_9$ ferner Phenylen ist.

Besonders bevorzugt werden Verbindungen der Formel I, worin $R_1$ $C_1-C_{18}$ Alkyl oder Phenyl ist, und $R_2$ $C_4-C_8$ Alkyl, $\alpha$-Methylbenzyl oder $\alpha,\alpha$-Dimethylbenzyl ist, und $R_4$ Wasserstoff oder $C_1-C_8$ Alkyl bedeutet, und $R_3$ Wasserstoff, $C_1-C_8$ Alkyl, $C_3-C_{20}$ Alkoxycarbonyl, $C_4-C_{21}$ Alkoxycarbonyläthyl, $\alpha$-Methylbenzyl oder $\alpha,\alpha$-Dimethylbenzyl bedeutet, und $R_5$ und $R_6$ unabhängig voneinander $C_1-C_{12}$ Alkyl, Allyl, Cyclohexyl oder eine 2,2,6,6-Tetramethylpiperidin-4-ylgruppe sind, und $R_5$ ferner Wasserstoff ist, oder $R_5$ und $R_6$ zusammen mit dem N-Atom, an welches sie gebunden sind, Piperidin, Hexamethylenimin oder Morpholin oder eine Gruppe der Formel VIII sind, wobei Q eine Gruppe der Formel IV ist.

Besonderes Interesse gilt Verbindungen der Formel I, worin $R_2$ $C_4-C_8$ Alkyl und $R_3$ und $R_4$ Wasserstoff oder $C_1-C_8$ Alkyl bedeuten.

Beispiele für Verbindungen der Formel I sind:

1. 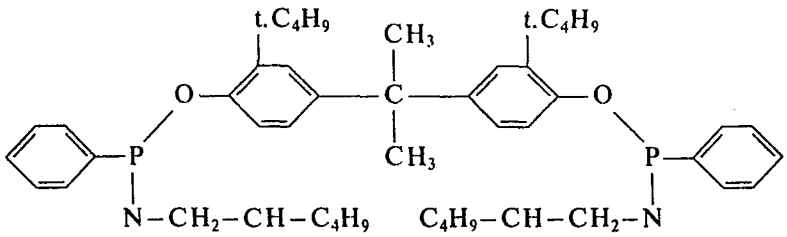

2. Phenylphosphonigsäure-mono-[2,6-di-t.butyl-4-(2′,4′-di-t.butylphenoxycarbonyl)-phenyl]ester-monopiperidid.
3. o-Tolylphosphonigsäure-mono-(2,6-di-t.butyl-4-octadecyloxycarbonyläthylphenyl)ester-mono-(di-n-butyl)-amid

4. 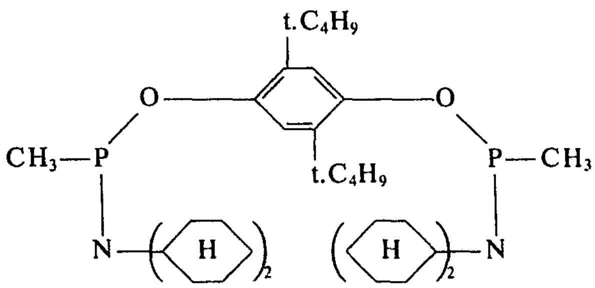

5. 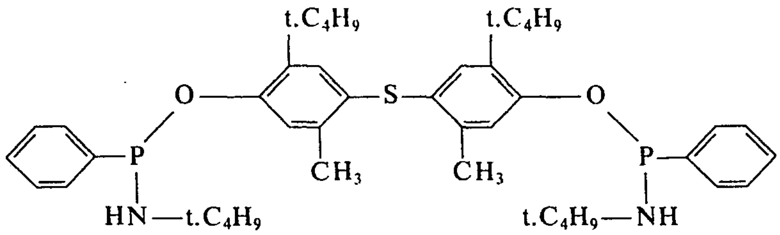

6. 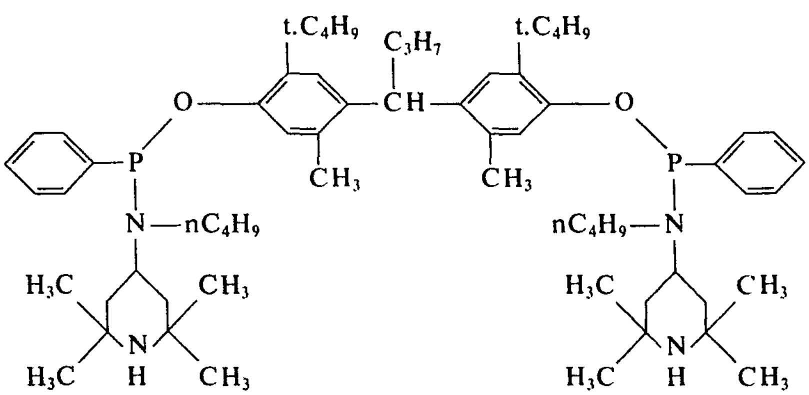

7. 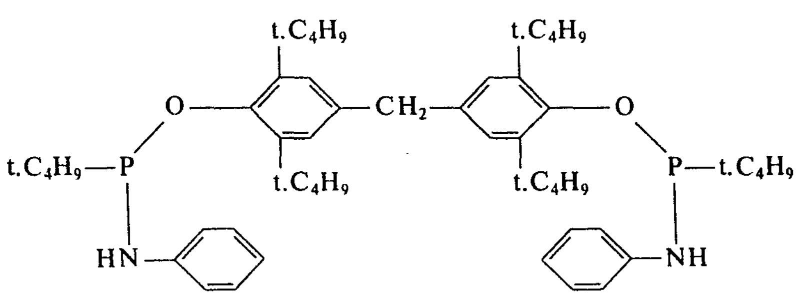

8. $Z_1—NH—(CH_2)_2—N(Z_1)—(CH_2)_2—NH—Z_1$

$Z_1$: 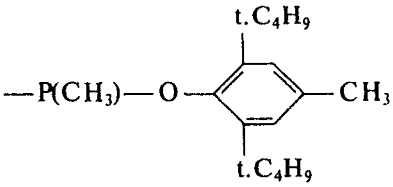

9. 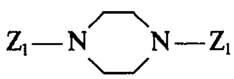 ($Z_1$ wie in Verbindung 8)

10. Phenylphosphonigsäure-mono-2,4-di-t.amylphenylester-mono-(diallyl)amid.
11. 4-Diäthylaminophenyl-phosphonigsäure-mono-(2,6-di-t.butyl-phenyl)ester-mono-phenylamid.
12. $(Z_2)_2N—C_8H_{17}$

$Z_2$: 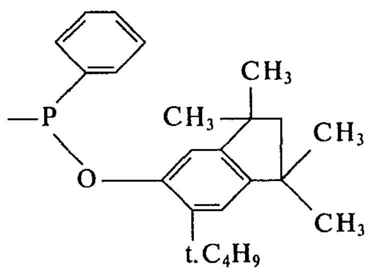

13. Phenylphosphonigsäure-mono-(1,1,3,3-tetramethyl-indian-5-yl)ester-mono-(di-cyclohexyl)-amid

14. 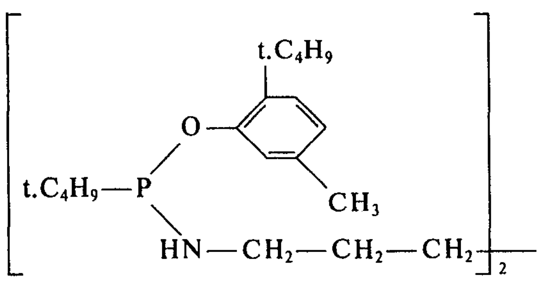

Die Herstellung der Verbindungen der Formel I ist an sich bekannt und kann beispielsweise mittels dem Fachmann bekannter Amidierungs- und Veresterungsreaktionen erfolgen.
In der Regel erfolgt die Herstellung der Verbindungen der Formel I durch Umsetzung einer Verbindung der Formel X

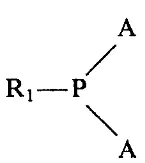 (X)

worin $R_1$ die oben angegebene Bedeutung hat und A eine reaktionsfähige Gruppe bedeutet mit einem Phenol der Formel XI

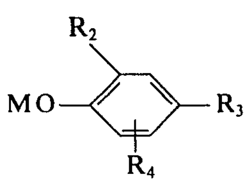 (XI)

worin $R_2$, $R_3$ und $R_4$ die oben angegebene Bedeutung haben, und M Wasserstoff oder ein Alkalimetall, wie Na oder K bedeutet, und einem Amin der Formel XII

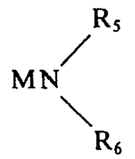

(XII)

worin M, $R_5$ und $R_6$ die oben angegebene Bedeutung haben.

Eine reaktionsfähige Gruppe A ist beispielsweise Halogen, insbesondere Cl; Phenoxy oder eine Gruppe $-OR_{16}$ oder $-N(R_{16})_2$, worin $R_{16}$ $C_1-C_4$ Alkyl, wie Methyl, Äthyl, n-Propyl, iso-Propyl, n-Butyl, sec.Butyl oder t-Butyl ist.

Es können dabei zuerst die Verbindung der Formel X mit dem Phenol der Formel XI in ungefähr molaren Mengen umgesetzt und anschließend das erhaltene Zwischenprodukt der Formel XIII

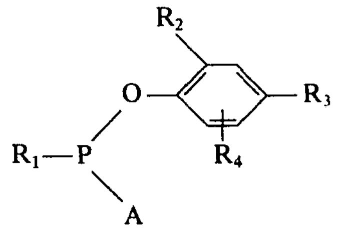

(XIII)

mit dem Amin der Formel XIV umgesetzt werden, wobei vorteilhaft das Amin in einem Überschuß eingesetzt wird.

Die beiden oben beschriebenen Reaktionsschritte können auch in umgekehrter Reihenfolge durchgeführt werden, oder sie können simultan durchgeführt werden.

Die Reaktion kann in einem aprotischen Lösungsmittel wie Benzol, Toluol, Xylol, Chlorbenzol, Dichlorbenzol oder Siedegrenzenbenzin bei Temperaturen von 80–160°C, bevorzugt bei Rückflußtemperatur erfolgen; oder ohne Lösungsmittel bei einer Temperatur von 80–220°C durchgeführt werden. Vorzugsweise wird die Reaktion in Gegenwart eines Säureakzeptors wie $Na_2CO_3$, $NaHCO_3$, $K_2CO_3$, $KHCO_3$, NaOH, KOH oder einem tertiären Amin, wie Triäthylamin oder Pyridin durchgeführt. Im Überschuß eingesetztes Amin der formel XIV kann auch als Lösungsmittel und/oder als Säureakzeptor fungieren.

Die Ausgangsstoffe der Formeln X, XI und XII sind bekannte Verbindungen, oder können, sofern sie neu sind, in Analogie zu bekannten hergestellt werden.

Die Verbindungen der Formel I können gemäß der vorliegenden Erfindung als Stabilisatoren für organisches polymeres Material gegen dessen Schädigung durch Einwirkung von Sauerstoff, Licht und Wärme verwendet werden. Organisches polymeres Material, das stabilisiert werden kann, schließt beispielsweise ein:

1. Polymere von Mono- und Diolefinen, beispielsweise Polyäthylen (das gegebenenfalls vernetzt sein kann), Polypropylen, Polyisobutylen, Polybuten-1, Polymethylpenten-1, Polyisopren oder Polybutadien sowie Polymerisate von Cycloolefinen wie z. B. von Cyclopenten oder Norbornen.
2. Mischungen der unter 1) genannten Polymeren, z. B. Mischungen von Polypropylen mit Polyäthylen oder mit Polyisobutylen.
3. Copolymere von Mono- und Diolefinen untereinander oder mit anderen Vinylmonomeren, wie z. B. Äthylen-Propylen-Copolymere, Propylen-Buten-1-Copolymere, Propylen-Isobutylen-Copolymere, Äthylen-Buten-1-Copolymere, Propylen-Butadien-Copolymere, Isobutylen-Isopren-Copolymere, Äthylen-Alkylacrylat-Copolymere, Äthylen-Alkylmethacrylat-Copolymere, Äthylen-Vinylacetat-Copolymere oder Äthylen-Acrylsäure-Copolymere und deren Salze (Ionomere), sowie Terpolymere von Äthylen mit Propylen und einem Dien, wie Hexadien, Dicyclopentadien oder Äthylidennorbornen.
4. Polystyrol.
5. Copolymere von Styrol oder $\alpha$-Methylstyrol mit Dienen oder Acrylderivaten, wie z. B. Styrol-Butadien, Styrol-Acrylnitril, Styrol-Alkylmethacrylat, Styrol-Acrylnitril-Methylacrylat; Mischungen von hoher Schlagzähigkeit aus Styrol-Copolymeren und einem anderen Polymer wie z. B. einem Polyacrylat, einem Dien-Polymeren oder einem Äthylen-Propylen-Dien-Terpolymeren; sowie Block-Copolymere des Styrols, wie z. B. Styrol-Butadien-Styrol, Styrol-Isopren-Styrol, Styrol-Äthylen/Butylen-Styrol oder Styrol-Äthylen/Propylen-Styrol, sowie Copolymere aus Styrol, Butadien und Acrylsäure.
6. Pfropfcopolymere von Styrol, wie z. B. Styrol auf Polybutadien, Styrol und Acrylnitril auf Polybutadien, Styrol und Maleinsäureanhydrid auf Polybutadien, Styrol und Alkylacrylate bzw. Alkylmethacrylate auf Polybutadien, Styrol und Acrylnitril auf Äthylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 5) genannten Copolymeren, wie sie z. B. als sogenannte ABS, MBS, ASA oder AES-Polymere bekannt sind.
7. Halogenhaltige Polymere, wie z. B. Polychloropren, Chlorkautschuk, chloriertes oder chlorsulfoniertes Polyäthylen, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere wie Vinylchlorid-Vinylidenchlorid, Vinylchlorid-Vinylacetat oder Vinylidenchlorid-Vinylacetat.
8. Polymere, die sich von $\alpha,\beta$-ungesättigten Säuren und deren Derivaten ableiten, wie Polyacrylate und Polymethacrylate, Polyacrylamide und Polyacrylnitrile.
9. Copolymere der unter 8) genannten Monomeren untereinander oder mit anderen ungesättigten Monomeren, wie z. B. Acrylnitril-Butadien-Copolymere, Acrylnitril-Alkylacrylat-Copolymere, Acrylnitril-Vinylchlorid-Copolymere, oder Acrylnitril-Alkylmethacrylat-Butadien-Terpolymere.
10. Polymere, die sich von ungesättigten Alkoholen und Aminen bzw. deren Acylderivaten oder Acetalen ableiten, wie Polyvinylalkohol, Polyvinylacetat-, -stearat, -benzoat, -maleat, Polyvinylbutyral, Polyallylphthalat, Polyallylmelamin.
11. Homo- und Copolymere von cyclischen Äthern, wie Polyalkylenglykole, Polyäthylenoxyd, Polypropylenoxyd oder deren Copolymere mit Bis-glycidyläthern.
12. Polyacetale, wie Polyoxymethylen, sowie solche Polyoxymethylene, die Comonomere wie z. B. Äthylenoxyd enthalten.
13. Polyphenylenoxyde und -sulfide.
14. Polyurethane, die sich von Polyäthern, Polyestern und Polybutadienen mit endständigen Hydroxylgruppen einerseits und aliphatischen oder aromatischen Polyisocyanaten andererseits ableiten sowie deren Vorprodukte.
15. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, Polyamid 6/10, Polyamid 11, Polyamid 12, Poly-2,4,4-trimethyl-hexamethylen-terephthalamid, Poly-m-phenylen-isophthalamid, sowie deren Copolymere mit Polyäthern wie z. B. mit Polyäthylenglykol, Polypropylenglykol oder Polytetramethylenglykol.
16. Polyharnstoffe, Polyamide und Polyamid-imide.
17. Polyester, die sich von Dicarbonsäuren und Dialkoholen und/oder von Hydroxycarbonsäuren oder den entsprechenden Lactonen ableiten, wie Polyäthylenterephthalat, Polybutylenterephthalat, Poly-1,4-dimethylolcyclohexanterephthalat, Polyhydroxybenzoate, sowie Block-Polyäther-ester, die sich von Polyäthern mit Hydroxylendgruppen ableiten.
18. Polycarbonate.
19. Polysulfone und Polyäthersulfone.
20. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
21. Trocknende und nicht-trocknende Alkydharze.
22. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
23. Vernetzbare Acrylharze, die sich von substituierten Acrylsäureestern ableiten wie z. B. von Epoxyacrylaten, Urethan-acrylaten oder Polyester-acrylaten.
24. Alkydharze, Polyesterharze und Acrylatharze, die mit Melaminharzen, Harnstoffharzen, Polyisocyanaten oder Epoxidharzen vernetzt sind.
25. Vernetzte Epoxidharze, die sich von Polyepoxiden ableiten, z. B. von Bis-glycidyläthern oder von cycloaliphatischen Diepoxiden.
26. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseäther, wie Methylcellulose.
27. Natürliche und synthetische organische Stoffe, die reine monomere Verbindungen oder Mischungen von solchen darstellen, beispielsweise Mineralöle, tierische und pflanzliche Fette, Öle und Wachse, oder Öle, Wachse und Fette auf Basis synthetischer Ester (z. B. Phthalate, Adipate, Phosphate oder Trimellithate), sowie Abmischungen synthetischer Ester mit Mineralölen in beliebigen Gewichtsverhältnissen, wie sie z. B. als Weichmacher für Kunststoffe oder als Spinnpräparationen Anwendung finden, sowie deren wäßrigen Emulsionen.
28. Wäßrige Emulsionen natürlicher oder synthetischer Kautschuke wie z. B. Naturkautschuk-Latex oder Latices von carboxylierten Styrol-Butadien-Copolymeren.

Die Verbindungen der Formel I werden den Substraten in einer Konzentration von 0,005 bis 5 Gew.-%, berechnet auf das zu stabilisierende Material, einverleibt.

Vorzugsweise werden 0,01 bis 1,0 besonders bevorzugt 0,02 bis 0,5 Gew.-% der Verbindungen, berechnet auf das zu stabilisierende Material, in dieses eingearbeitet. Die Einarbeitung kann beispielsweise durch Einmischen mindestens einer der Verbindungen der Formel I und gegebenenfalls weiterer Additive nach den in der Technik üblichen Methoden, vor oder während der Formgebung, oder auch

durch Aufbringen der gelösten oder dispergierten Verbindungen auf das Polymere, gegebenenfalls unter nachträglichem Verdunsten des Lösungsmittels, erfolgen.

Die neuen Verbindungen können auch in Form eines Masterbatches, der diese Verbindungen beispielsweise in einer Konzentration von 2,5 bis 25 Gew.-%enthält, den zu stabilisierenden Kunststoffen zugesetzt werden.

Im Falle von vernetztem Polyäthylen werden die Verbindungen vor der Vernetzung beigefügt.

Die Erfindung betrifft daher auch die durch Zusatz einer Verbindung der Formel I gegen Einwirkung von Sauerstoff, Licht und Wärme stabilisierten polymeren Materialien, die gegebenenfalls noch andere Zusätze enthalten können. Die so stabilisierten Polymeren können in verschiedenster Form angewendet werden, z. B. als Folien, Fasern, Bändchen, Profile oder als Bindemittel für Lacke, Klebemittel oder Kitte.

Als Beispiele weiterer Additive, mit denen zusammen die Stabilisatoren eingesetzt werden können, sind zu nennen: Antioxydantien, UV-Absorber und Lichtschutzmittel, wie 2-(2'-Hydroxyphenyl)-benztriazole, 2,4-Bis-(2'-hydroxyphenyl)-6-alkyl-s-triazine, 2-Hydroxybenzophenone, 1,3-Bis-(2'-hydroxybenzoyl)-benzole, Ester von gegebenenfalls substituierten Benzoesäuren, Acrylate, des weiteren Nickelverbindungen, sterisch gehinderte Amine, Oxalsäurediamide, Metalldesaktivatoren, Phosphite, peroxidzerstörende Verbindungen, Polyamidstabilisatoren, basische Co-Stabilisatoren, Nukleierungsmittel oder sonstige Zusätze wie z. B. Weichmacher, Gleitmittel, Emulgatoren, Füllstoffe, Ruß, Asbest, Kaolin, Talk, Glasfasern, Pigmente, optische Aufheller, Flammschutzmittel, Antistatica.

Als Co-Stabilisatoren eignen sich beispielsweise die in der DE-OS 2 512 895 spezifisch erwähnten Verbindungen.

Die Erfindung wird mit den nachfolgenden Beispielen näher erläutert:

## Beispiel 1

Phenylphosphonigsäure-mono-(2,4,6-tri.-t.butylphenyl)ester-mono-piperidid

52,4 g (0,2 Mol) 2,4,6-Tri-t.butylphenol werden in 200 ml Triäthylamin vorgelegt. Während 2 Stunden werden bei Raumtemperatur 29,2 ml (0,2 Mol) Phenyldichlorphosphin zugetropft und die Reaktionsmasse anschließend für 8 Stunden auf Rückflußtemperatur erwärmt. Nach der Zugabe von 19,7 ml (0,2 Mol) Piperidin wird das Gemisch während weiteren 10 Stunden bei Rückflußtemperatur gehalten und das Triäthylamin am Vakuum abgedampft und den Rückstand in Toluol aufgenommen, filtriert, um nach der Abdestillation des Lösungsmittels des Produkt mit einem Fp. von 97—98°C zu erhalten.

## Beispiel 2

Phenylphosphonigsäure-mono-[4-(1,1,3,3-tetramethylbutyl)-2-methylphenyl]-ester-mono-(dicyclohexyl)-amid

Zu 40,3 ml (0,3 Mol Phenyldichlorphosphin gelöst in 200 ml Toluol, wird ein Gemisch aus 71,6 ml Dicyclohexylamin (0,3 Mol) und 30,3 ml Triäthylamin bei Raumtemperatur während 1,5 Stunden zugetropft. Anschließend wird das Gemisch für 15 Stunden auf Rückflußtemperatur erhitzt, um danach bei Raumtemperatur ein Gemisch aus 66 g (0,3 Mol) 2-Methyl-4-(1,1,3,3-tetramethylbutyl)-phenol und 30,3 ml Triäthylamin zuzutropfen. Es wird wiederum für 15 Stunden auf Rückflußtemperatur erwärmt, danach die Lösung filtriert, das Filtrat am Rotavap eingedampft, um so das Produkt mit einem Fp. von 84—86°C zu erhalten.

## Beispiel 3—17

Analog zu Beispiel 1 und 2 wurden die folgenden Verbindungen hergestellt:

| Beispiel Nr. | Verbindung | Fp. |
|---|---|---|
| 3 | Phenylphosphonigsäure-mono-(2,6-di-t.butyl-phenyl)ester-mono-piperidid | 115°C |
| 4 | Phenylphosphonigsäure-mono-(2,6-di-t.butyl-4-methylphenyl)-ester-mono-(di-butyl)amid<br>Kp. 170°C (1,33 Pa) | flüssig |

Fortsetzung

| Beispiel Nr. | Verbindung | Fp. |
|---|---|---|
| 5. | 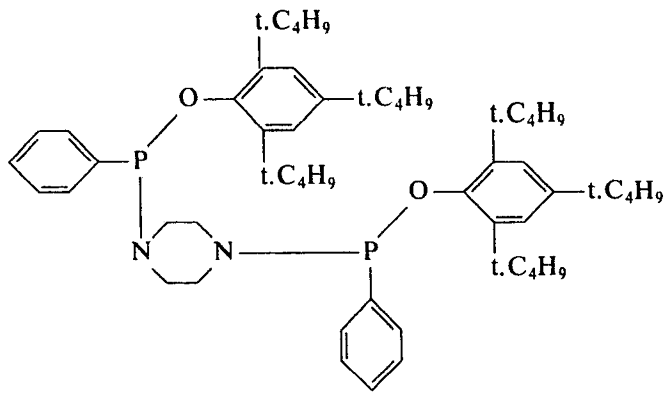 | 200–210 °C |
| 6. | Phenylphosphonigsäure-mono-(2,4,6-tri-t.butyl-phenyl)ester-mono-(di-butyl)amid | 84 °C |
| 7. | Phenylphosphonigsäure-mono-(2,4,6-tri-t.butyl-phenyl)ester-mono-(2,2,6,6-tetramethylpiperidin-4-yl)amid | 150 °C |
| 8. | 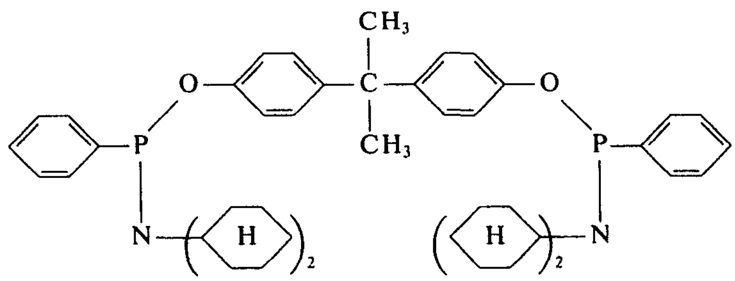<br>Elementaranalyse:<br>$C_{ber.}$ 76,3 %; $H_{ber.}$ 8,54 %; $N_{ber.}$ 3,5 %; $P_{ber.}$ 7,7 %.<br>$C_{gef.}$ 77,2 %; $H_{gef.}$ 9,0 %; $N_{gef.}$ 3 %; $P_{gef.}$ 7,5 %. | harzartig |
| 9. | Phenylphosphonigsäure-mono-(p-1,1,3,3-tetramethylbutyl-phenyl)-ester-mono-(dicyclohexyl)amid. | 144 °C |
| 10. | Phenylphosphonigsäure-mono-[2,4-di-(1,1,3,3-tetramethylbutyl)-phenyl]-ester-mono(dicyclohexyl)amid | 135–138 °C |
| 11. | Phenylphosphonigsäure-mono-(2-methyl-4-t.butyl-phenyl)ester-mono-(dicyclohexyl)amid | 80 °C |
| 12. | 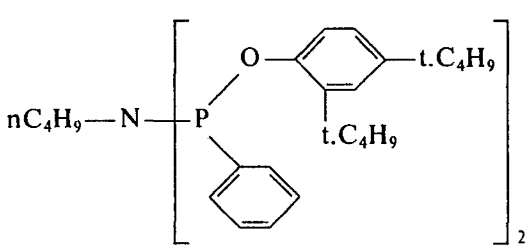 | harzartig |

Fortsetzung

| Beispiel Nr. | Verbindung | Fp. |
|---|---|---|
| | Elementaranalyse:<br>$C_{ber.}$ 75,72 % ; $H_{ber.}$ 8,8 % ; $N_{ber.}$ 2,01 % ; $P_{ber.}$ 8,8 % .<br>$C_{gef.}$ 75,5 % ; $H_{gef.}$ 8,8 % ; $N_{gef.}$ 1,7 % ; $P_{gef.}$ 8,1 % . | |
| 13. | Phenylphosphonigsäure-mono-(2,6-di-t.butyl-4-methylphenyl)ester-mono-piperidid | 80°C |
| 14. | Phenylphosphonigsäure-mono-(2,4-di-tert.butylphenyl)ester-mono-piperidid<br>Kp. 190°C (0,133 Pa) | flüssig |
| 15. | Phenylphosphonigsäure-mono-[p-(1,1,3,3-tetramethylbutyl)-phenyl]-ester-mono-(di-isopropyl)amid<br>Kp. 180°C (0,133 Pa) | flüssig |
| 16. | Phenylphosphonigsäure-mono-(2,4-di-t.butylphenyl)ester-mono-(di-n.butyl)-amid<br>Kp. 185–190°C (0,133 Pa) | flüssig |
| 17. | Phenylphosphonigsäure-mono-(2,4-di-t.butylphenyl)ester-mono-(dicyclohexyl)amid<br>Kp. 200°C (1,064 Pa) | flüssig |
| 18. | Phenylphosphonigsäure-mono-(2,6-di-t.butyl-4-methyl-phenyl)ester-mono-hexamethylenimid | 104°C |

## Beispiel 19

100 Teile Polyäthylen hoher Dichte mit einem Molekulargewicht von ca. 500 000 (»Lupolen 5260 Z®« in Pulverform der Firma BASF) enthaltend 0,05 Teile Pentaerythrit-tetrakis-[3-(3,5-di-t.butyl-4-hydroxyphenyl)]-propionat werden mit den Phosphoniten der untenstehenden Tabelle 1 trokken gemischt. Die Mischungen werden in einem Brabander-Plastographen bei 200° und 50 Upm geknetet.

Während dieser Zeit wird der Knetwiderstand als Drehmoment kontinuierlich registriert. Infolge Vernetzung des Polymeren erfolgt im Verlauf der Knetzeit nach anfänglicher Konstanz eine rasche Zunahme des Drehmomentes. Die Wirksamkeit der Stabilisatoren äußert sich in einer Verlängerung der Konstantzeit.

Tabelle 1

| Teile Phosphonit gemäß | Beispiel Nr. | Zeit in Minuten bis Änderung des Drehmomentes |
|---|---|---|
| Keines | | 2 |
| 0,1 Teil | 1 | 15 |
| 0,05 Teile | 1 | 12 |
| 0,1 Teil | 2 | 20,5 |
| 0,05 Teile | 2 | 11,5 |
| 0,1 Teil | 3 | 18,5 |

Forsetzung

| Teile Phosphonit gemäß | Beispiel Nr. | Zeit in Minuten bis Änderung des Drehmomentes |
|---|---|---|
| 0,05 Teile | 3 | 13' |
| 0,1 Teil | 8 | 16,5 |
| 0,1 Teil | 9 | 24' |
| 0,05 Teile | 9 | 14,5 |
| 0,1 Teil | 11 | 18,5 |
| 0,05 Teile | 11 | 11,5 |
| 0,1 Teil | 13 | 15,5 |
| 0,05 Teile | 18 | 12 |
| 0,1 Teil | 18 | 15 |

Beispiel 20

100 Teile Polypropylen Pulver (Propathene HF 20® der Firma ICI) werden mit 0,1 Teil Calciumstearat, mit der Verbindung 11 in den in den untenstehenden Tabellen angegebenen Mengen und mit 0,1 Teil Pentaerythrit-tetrakis-[3-(3,5-di-t.butyl-4-butyl-4-hydroxyphenyl)]-propionat vermischt.

Diese Gemische werden einerseits 5 × hintereinander in einem Einschneckenextruder bei maximal 260°C anderseits 3 × hintereinander im gleichen Extruder bei 280°C extrudiert, in jedem Fall mit 100 Umdrehungen pro Minute. Jeweils nach der 1. 3. und 5., beziehungsweise nach der 1. und 3. Extrusion wird der Schmelzindex des Polymeren, gemessen, wobei die Belastung 2160 g, die Temperatur 230°C und die Meßgröße g/10 Min. ist. Der Abbau des Polymeren äußerst sich in einem Ansteigen des Schmelzindex.

Tabelle A

| Teile Phosphonit gemäß | Beispiel Nr. | Schmelzindex nach mehreren Extrusionen | | | | |
|---|---|---|---|---|---|---|
| | | bei 260°C | | | bei 280°C | |
| | | 1. | 3. | 5. | 1. | 3. |
| keiner | | 6,3 | 8,9 | 15,0 | 7,1 | 21,4 |
| mit 0,025 Teilen | 11 | 3,2 | 4,2 | 6,1 | 4,2 | 7,6 |
| mit 0,05 Teilen | 11 | 3,1 | 3,6 | 4,3 | 3,5 | 5,2 |

**Patentansprüche**

1. Verbindungen der Formel I

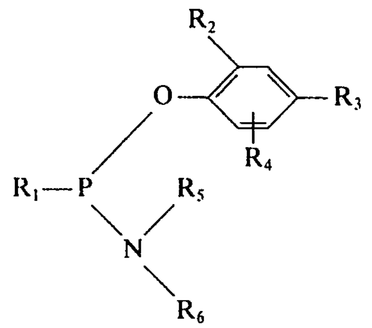

(I)

worin $R_1$ $C_1-C_{18}$ Alkyl, Styryl, Biphenylyl oder Phenyl, welches mit einer bis drei $C_1-C_{18}$ Alkylgruppen und/oder einer Dialkyl ($C_1-C_{12}$)-aminogruppe in 4-Stellung substituiert sein kann, bedeutet, und $R_2$ und $R_4$ unabhängig voneinander $C_1-C_{18}$ Alkyl, $C_5-C_{12}$ Cycloalkyl, Phenyl, Benzyl, $\alpha$-Methylbenzyl oder $\alpha,\alpha$-Dimethylbenzyl sind, und $R_4$ ferner Wasserstoff ist, und $R_3$ Wasserstoff, $C_1-C_{18}$ Alkyl, $C_1-C_{18}$ Alkoxy, $C_2-C_{19}$ Alkoxycarbonyl, $C_3-C_{24}$ Alkoxycarbonylalkyl, oder gegebenenfalls mit einer bis drei $C_1-C_8$ Alkylgruppen substituiertes Phenoxycarbonyl oder $C_8-C_{16}$ Phenoxycarbonylalkyl ist oder $R_3$ ferner Phenyl, Benzyl, $\alpha$-Methylbenzyl, $\alpha,\alpha$-Dimethylbenzyl oder eine der Gruppen II oder III

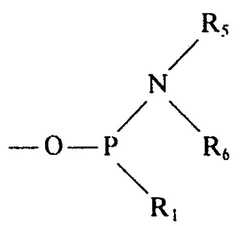

(II)

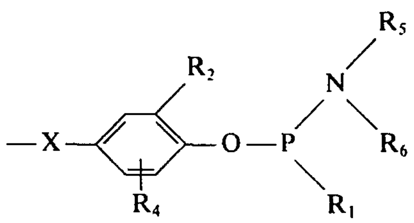

(III)

bedeutet, worin X $-O-$, $-S-$ oder $-(R_7)C(R_8)-$ bedeutet, wobei $R_7$ und $R_8$ unabhängig voneinander Wasserstoff oder $C_1-C_8$ Alkyl sind, und ferner $R_3$ und $R_4$ zusammen ein in 4- und 5-Stellung ankondensierter 1,1,3,3-Tetramethyl-trimethylen-1,3-Rest sind, und $R_5$ und $R_6$ unabhängig voneinander $C_1-C_{22}$ Alkyl, $C_2-C_{21}$ Oxaalkyl, $C_2-C_{21}$ Thiaalkyl, $C_3-C_{18}$ Alkenyl, $C_3-C_{18}$ Alkinyl, $C_2-C_6$ Hydroxyalkyl, $C_3-C_{24}$ Alkoxycarbonylalkyl, $C_5-C_{12}$ Cycloalkyl, $C_6-C_{14}$ Aryl, $C_7-C_{15}$ Alkaryl, $C_7-C_{15}$ Aralkyl oder eine Piperidin-4-yl-gruppe der Formel IX bedeuten

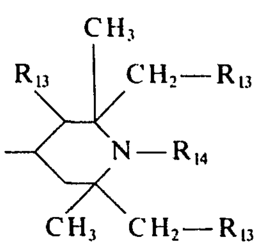

(IX)

worin $R_{13}$ Wasserstoff oder Methyl bedeutet, und $R_{14}$ Wasserstoff, Oxyl, $C_1-C_{18}$ Alkyl, $C_3-C_8$ Alkenyl, $C_3-C_6$ Alkinyl, $C_7-C_{12}$ Aralkyl, $C_2-C_{21}$ Alkoxyalkyl, eine aliphatische Acylgruppe mit 1–4 C-Atomen oder eine Gruppe $-CH_2COOR_{15}$ ist, wobei $R_{15}$ $C_1-C_{12}$ Alkyl, $C_3-C_8$ Alkenyl, Phenyl, $C_7-C_8$ Aralkyl oder Cyclohexyl bedeutet, und $R_5$ ferner Wasserstoff oder eine Gruppe der Formel IV

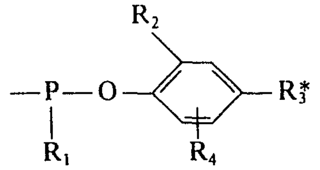

(IV)

ist, worin $R_1$, $R_2$ und $R_4$ die oben angegebene Bedeutung haben, und $R_3^*$ die Bedeutung von $R_3$ mit Ausnahme der Gruppen der Formeln II und III hat, und $R_6$ ferner eine der Gruppen V oder VI

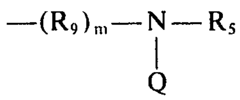

(V)

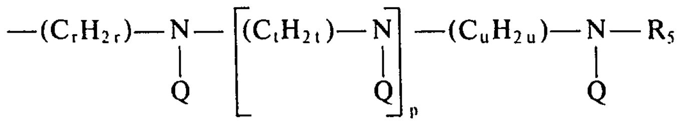

(VI)

bedeutet, worin Q eine Gruppe der Formel IV ist, worin $R_1$, $R_2$, $R_3^*$ und $R_4$ die oben angegebene Bedeutung haben, und m Null oder 1 ist, und $R_9$ gegebenenfalls mit einem oder zwei Sauerstoff- oder Schwefelatomen unterbrochenes $C_2-C_{22}$ Alkylen, $C_4-C_{22}$ Alkenylen, $C_4-C_{22}$ Alkinylen, $C_5-C_9$ Cycloalkylen oder eine Gruppe der Formel VII

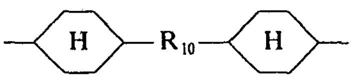

(VII)

ist, worin $R_{10}$ $-O-$, $-S-$ oder $-(R_{11})C(R_{12})$ bedeutet, wobei $R_{11}$ und $R_{12}$ unabhängig voneinander Wasserstoff oder $C_1-C_8$ Alkyl sind, oder $R_{11}$ und $R_{12}$ zusammen mit dem C-Atom, an welches sie gebunden sind, $C_5-C_{12}$ Cycloalkyl ergeben oder $R_{11}$ und $R_{12}$ zusammen 1,4-Cyclohexylendimethylen oder 1,3,3-Trimethylcyclohexylen-1,5 bedeuten und $R_9$ ferner Phenylen oder Biphenylen bedeutet, r, t und u unabhängig voneinander 2, 3, 4, 5 oder 6 sind, p Null, 1, 2 oder 3 ist und ferner $R_5$ und $R_6$ in der Formel I zusammen mit dem N-Atom, an das sie gebunden sind, gegebenenfalls durch 1–5 Methyl- oder Äthylgruppen substituiertes Pyrrolidin, Oxazolidin, Piperidin, Morpholin, Piperazin, Hexamethylenimin oder eine Gruppe der Formel VIII

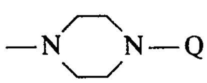

(VIII)

bilden.

2. Verbindungen gemäß Anspruch 1 der Formel I, worin $R_1$ $C_1-C_{18}$ Alkyl, Styryl, oder Phenyl, welches mit einer bis drei $C_1-C_4$ Alkylgruppen und/oder einer Dialkyl($C_1-C_4$)-aminogruppe in 4-Stellung substituiert sein kann, bedeutet und $R_2$ und $R_4$ unabhängig voneinander $C_1-C_8$ Alkyl, $C_5-C_7$ Cycloalkyl, Phenyl, Benzyl, $\alpha$-Methylbenzyl, oder $\alpha,\alpha$-Dimethylbenzyl sind, und $R_4$ ferner Wasserstoff ist, und $R_3$ Wasserstoff, $C_1-C_{12}$ Alkyl, $C_1-C_8$ Alkoxy, $C_2-C_{19}$ Alkoxycarbonyl, $C_3-C_{20}$ Alkoxycarbonylmethyl, $C_4-C_{21}$ Alkoxycarbonyläthyl, Phenyl, Benzyl, $\alpha$-Methylbenzyl, $\alpha,\alpha$-Dimethylbenzyl oder eine der Gruppen II oder III ist, worin $R_1$, $R_2$ und $R_4$ die oben angegebene Bedeutung haben, und $R_5$ und $R_6$ wie untenstehend definiert sind, und X eine Gruppe der Formel $-(R_7)C(R_8)-$ bedeutet, worin $R_7$ und $R_8$ unabhängig voneinander Wasserstoff oder Methyl sind, und ferner $R_3$ und $R_4$ zusammen ein in 4- und 5-Stellung ankondensierter, 1,1,3,3-Tetramethyl-trimethylen-1,3-Rest sind, und $R_5$ und $R_6$ unabhängig voneinander $C_1-C_{18}$ Alkyl, $C_3-C_4$ Alkenyl, $C_3-C_4$ Alkinyl, $C_3-C_{20}$ Alkoxycarbonylmethyl, $C_4-C_{21}$ Alkoxycarbonyläthyl, $C_5-C_7$ Cycloalkyl, Phenyl, $C_7-C_{15}$ Alkaryl, Benzyl oder eine Piperidin-4-yl-gruppe der Formel IX bedeuten, und $R_5$ ferner Wasserstoff und $R_6$ ferner eine Gruppe der Formel V oder VI ist, worin r, t und u 2 oder 3 sind und p Null oder 1 ist, und $R_5$ und $R_6$ ferner zusammen mit dem N-Atom, an welches sie gebunden sind, Pyrrolidin, Oxazolidin, Piperidin, Morpholin, Piperazin, Hexamethylenimin oder eine Gruppe der Formel VIII bilden, und $R_9$ gegebenenfalls mit einem oder zwei Sauerstoff- oder Schwefelatomen unterbrochenes $C_2-C_9$ Alkylen, Cyclohexylen oder eine Gruppe der Formel VII ist, wobei $R_{10}$ sind, oder $R_{11}$ und $R_{12}$ zusammen mit dem C-Atom, an welches sie gebunden sind, Cyclohexylen, 1,4-Cyclohexyldimethylen oder 1,3,3-Trimethylcyclohexylen-1,5 sind, und $R_9$ ferner Phenylen ist.

3. Verbindungen gemäß Anspruch 1 der Formel I, worin $R_1$ $C_1-C_{18}$ Alkyl oder Phenyl ist, und $R_2$ $C_4-C_8$ Alkyl $\alpha$-Methylbenzyl oder $\alpha,\alpha$-Dimethylbenzyl ist, und $R_4$ Wasserstoff oder $C_1-C_8$ Alkyl bedeutet, und $R_3$ Wasserstoff, $C_1-C_8$ Alkyl, $C_3-C_{20}$ Alkoxycarbonylmethyl, $C_4-C_{21}$ Alkoxycarbonyläthyl, $\alpha$-Methylbenzyl oder $\alpha,\alpha$-Dimethylbenzyl bedeutet, und $R_5$ und $R_6$ unabhängig voneinander $C_1-C_{12}$ Alkyl, Allyl, Cyclohexyl oder eine 2,2,6,6-Tetramethylpiperidin-4-yl-gruppe sind und $R_5$ ferner Wasserstoff ist, oder $R_5$ und $R_6$ zusammen mit dem N-Atom, an welches sie gebunden sind, Piperidin, Hexamethylenimin oder Morpholin oder eine Gruppe der Formel VIII sind, wobei Q eine Gruppe der Formel IV ist.

4. Verbindungen gemäß Anspruch 1 der Formel I, worin $R_2$ $C_4-C_8$ Alkyl und $R_3$ und $R_4$ Wasserstoff oder $C_1-C_8$ Alkyl bedeuten.

5. Verbindungen gemäß Anspruch 1 der Formel I, worin $R_5$ und/oder $R_6$ eine Gruppe der Formel IX sind, worin $R_{13}$ Wasserstoff und $R_{14}$ Wasserstoff, $C_1-C_8$ Alkyl, Allyl, Benzyl oder Acetyl ist.

6. Verbindungen gemäß Anspruch 5, wobei $R_{14}$ Wasserstoff, Methyl oder Acetyl ist.

7. Gegen Einwirkung von Sauerstoff, Licht und Wärme stabilisiertes organisches polymeres Material enthaltend eine Verbindung der Formel I gemäß Anspruch 1.

8. Verfahren zur Herstellung der Verbindungen der Formel I durch Umsetzung einer Verbindung der Formel X

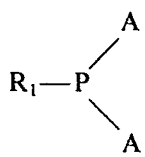

(X)

worin $R_1$ die im Anspruch 1 angegebene Bedeutung hat, und A eine reaktionsfähige Gruppe bedeutet mit einem Phenol der Formel XI

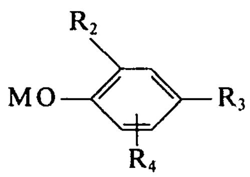

(XI)

worin $R_2$, $R_3$ und $R_4$ die oben im Anspruch 1 angegebene Bedeutung haben, und M Wasserstoff oder ein Alkalimetall ist, und einem Amin der Formel XII

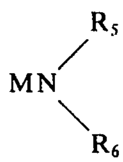

(XII)

worin M die oben angegebene Bedeutung hat und $R_5$ und $R_6$ die im Anspruch 1 angegebene Bedeutung haben.

## Claims

1. A compound of the formula I

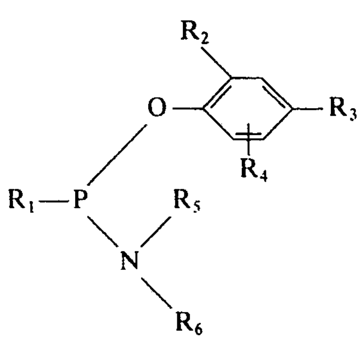

(I)

in which $R_1$ is $C_1-C_{18}$ alkyl, styryl, biphenylyl, or phenyl which can be substituted by one to three $C_1-C_8$ alkyl groups and/or one di($C_1-C_{12}$ alkylamino group in the 4-position, and $R_2$ und $R_4$ are each independently $C_1-C_{18}$ alkyl, $C_5-C_{12}$ cycloalkyl, phenyl, benzyl, $\alpha$-methylbenzyl or $\alpha,\alpha$-dimethylbenzyl, and $R_4$ can also be hydrogen, and $R_3$ is hydrogen, $C_1-C_{18}$ alkyl, $C_1-C_{18}$ alkoxy, $C_2-C_{19}$ alkoxycarbonyl or $C_3-C_{24}$ alkoxycarbonylalkyl, or $C_8-C_{16}$ phenoxycarbonylalkyl, or phenoxycarbonyl which is unsubstituted or substituted by one to three $C_1-C_8$ alkyl groups, or $R_3$ is phenyl, benzyl, $\alpha$-methylbenzyl,

$\alpha,\alpha$-dimethylbenzyl or one of the groups II or III

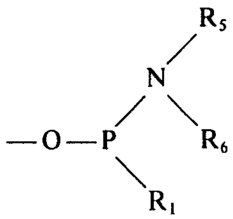

(II)

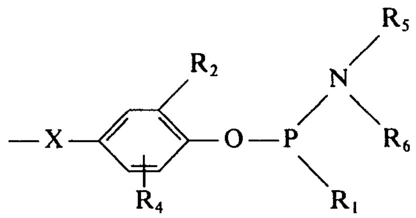

(III)

wherein X is $-O-$, $-S-$ or $-(R_7)C(R_8)-$, in which $R_7$ and $R_8$ are each independently hydrogen or $C_1-C_8$ alkyl, or $R_3$ and $R_4$ together are a 1,1,3,3-tetramethyl-1,3-trimethylene radical which is fused in the 4- and 5-position, and $R_5$ and $R_6$ are each independently $C_1-C_{22}$ alkyl, $C_2-C_{21}$ oxaalkyl, $C_2-C_{21}$ thiaalkyl, $C_3-C_{18}$ alkenyl, $C_3-C_{18}$ alkynyl, $C_2-C_6$ hydroxyalkyl, $C_3-C_{24}$ alkoxycarbonylalkyl, $C_5-C_{12}$ cycloalkyl, $C_6-C_{14}$ aryl, $C_7-C_{15}$ alkaryl or $C_7-C_{15}$ aralkyl, or a piperidin-4-yl group of the formula IX

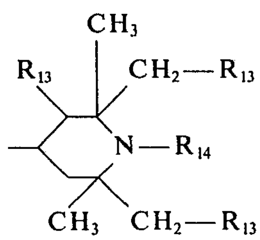

(IX)

wherein $R_{13}$ is hydrogen or methyl and $R_{14}$ is hydrogen, oxyl, $C_1-C_{18}$ alkyl, $C_3-C_8$ alkenyl, $C_3-C_6$ alkynyl, $C_7-C_{12}$ aralkyl, $C_2-C_{21}$ alkoxyalkyl, an aliphatic acyl group of 1 to 4 carbon atoms or a $-CH_2COOR_{15}$ group, in which $R_{15}$ is $C_1-C_{12}$ alkyl, $C_3-C_8$ alkenyl, phenyl, $C_7-C_8$ aralkyl or cyclohexyl, and $R_5$ can also be hydrogen or a group of the formula IV

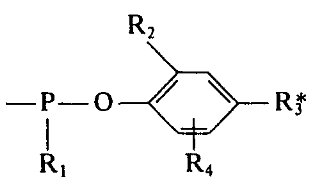

(IV)

in which $R_1$, $R_2$ and $R_4$ are as defined above and $R_3^*$ has the same definition as $R_3$, with the exception of the groups of the formulae II and III, and $R_6$ can also be one of the groups V or VI

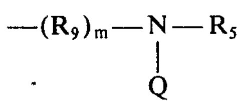

(V)

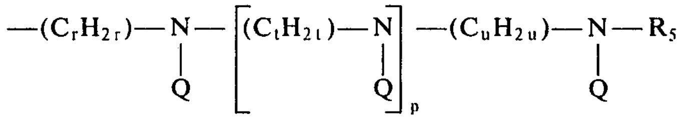

(VI)

in which Q is a group of the formula IV, in which $R_1$, $R_2$, $R_3^*$ and $R_4$ are as defined above, and m is zero or 1 and $R_9$ is $C_2-C_{22}$ alkylene which may be interrupted by one or two oxygen or sulfur atoms, $C_4-C_{22}$ alkenylene, $C_4-C_{22}$ alkynylene, $C_5-C_9$ cycloalkylene or a group of the formula VII

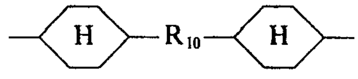

(VII)

in which $R_{10}$ is $-O-$, $-S-$ or $-(R_{11})C(R_{12})$, in which $R_{11}$ and $R_{12}$ are each independently hydrogen or

$C_1-C_8$ alkyl, or $R_{11}$ and $R_{12}$, together with the C atom to which they are attached, are $C_5-C_{12}$ cycloalkyl, or $R_{11}$ and $R_{12}$ together are 1,4-cyclohexylene-dimethylene or 1,3,3-trimethyl-1,5-cyclohexylene, or $R_9$ is phenylene or biphenylene, and r, t and u are each independently 2, 3, 4, 5 or 6, p is zero, 1, 2 or 3, and in formula I, $R_5$ and $R_6$, together with the N atom to which they are attached, form a pyrrolidine, oxazolidine, piperidine, morpholine, piperazine or hexamethyleneimine ring which is unsubstituted or substituted by 1 to 5 methyl or ethyl groups, or are a group of the formula VIII

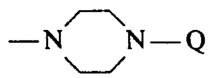

(VIII)

2. A compound according to claim 1, of the formula I, wherein $R_1$ is $C_1-C_{18}$ alkyl, styryl, or phenyl which can be substituted by one to three $C_1-C_4$ alkyl groups and/or a di($C_1-C_4$) alkylamino group in the 4-position, and $R_2$ and $R_4$ are each independently $C_1-C_8$ alkyl, $C_5-C_7$ cycloalkyl, phenyl, benzyl, $\alpha$-methylbenzyl or $\alpha,\alpha$-dimethylbenzyl, and $R_4$ can also be hydrogen, and $R_3$ is hydrogen, $C_1-C_{12}$ alkyl, $C_1-C_8$ alkoxy, $C_2-C_{19}$ alkoxycarbonyl, $C_3-C_{20}$ alkoxycarbonylmethyl, $C_4-C_{21}$ alkoxycarbonylethyl, phenyl, benzyl, $\alpha$-methylbenzyl or $\alpha,\alpha$-dimethylbenzyl, or one of the groups II or III, in which $R_1$, $R_2$ and $R_4$ are as defined above, $R_5$ and $R_6$ are as defined below and X is a group of the formula $-(R_7)C(R_8)-$, in which $R_7$ and $R_8$ are each independently hydrogen or methyl, or $R_3$ and $R_4$ together are a 1,1,3,3-tetramethyl-1,3-trimethylene radical which is fused in the 4- and 5-position, and $R_5$ and $R_6$ are each independently $C_1-C_{18}$ alkyl, $C_3-C_4$ alkenyl, $C_3-C_4$ alkynyl, $C_3-C_{20}$ alkoxycarbonylmethyl, $C_4-C_{21}$ alkoxycarbonylethyl, $C_5-C_7$ cycloalkyl, phenyl, $C_7-C_{15}$ alkaryl, benzyl or a piperidin-4-yl group of the formula IX, and $R_5$ can also be hydrogen and $R_6$ can also be a group of the formula V or VI, r, t and u are 2 or 3 and p is zero or 1, or $R_5$ and $R_6$, together with the N atom to which they are attached, form a pyrrolidine, oxazolidine, piperidine, morpholine, piperazine or hexamethyleneimine ring or a group of the formula VIII, and $R_9$ is $C_2-C_9$ alkylene which may be interrupted by one or two oxygen or sulfur atoms, cyclohexylene or a group of the formula VII, in which $R_{10}$ is $-O-$, $-S-$ or $-(R_{11})C(R_{12})-$, and $R_{11}$ and $R_{12}$ are each independently hydrogen or methyl, or $R_{11}$ and $R_{12}$, together with the C atom to which they are attached, are cyclohexylene, 1,4-cyclohexyldimethylene or 1,3,3-trimethyl-1,5-cyclohexylene, or $R_9$ is phenylene.

3. A compound according to claim 1, of the formula I, $R_1$ is $C_1-C_{18}$ alkyl or phenyl, $R_2$ is $C_4-C_8$ alkyl, $\alpha$-methylbenzyl or $\alpha,\alpha$-dimethylbenzyl, $R_4$ is hydrogen or $C_1-C_8$ alkyl, $R_3$ is hydrogen, $C_1-C_8$ alkyl, $C_3-C_{20}$ alkoxycarbonylmethyl, $C_4-C_{21}$ alkoxycarbonylethyl, $\alpha$-methylbenzyl or $\alpha,\alpha$-dimethylbenzyl, $R_5$ and $R_6$ are each independently $C_1-C_{12}$ alkyl, allyl, cyclohexyl or a 2,2,6,6-tetramethylpiperidin-4-yl group, and $R_5$ can also be hydrogen, or $R_5$ and $R_6$, together with the N atom to which they are attached, are piperidine, hexamethylenimine or morpholine or a group of the formula VIII, in which Q is a group of the formula IV.

4. A compound according to claim 1, of the formula I, in which $R_2$ is $C_4-C_8$ alkyl and $R_3$ and $R_4$ are hydrogen or $C_1-C_8$ alkyl.

5. A compound according to claim 1, of the formula I, $R_5$ and/or $R_6$ are a group of the formula IX, wherein $R_{13}$ is hydrogen and $R_{14}$ is hydrogen, $C_1-C_8$ alkyl, allyl, benzyl or acetyl.

6. A compound according to claim 5, in which $R_{14}$ is hydrogen, methyl or acetyl.

7. Organic polymeric material containing a compound of the formula I according to claim 1, which is stabilised against the action of oxygen, light and heat.

8. A process for the preparation of a compound of the formula I by reacting a compound of the formula X

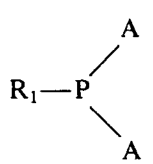

(X)

in which $R_1$ is as defined in claim 1 and A is a reactive group, with a phenol of the formula XI

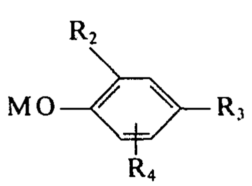

(XI)

in which $R_2$, $R_3$ and $R_4$ are as defined in claim 1 and M is hydrogen or an alkali metal, and an amine of the formula XII

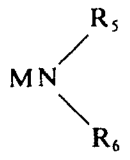

(XII)

in which M is as defined above and $R_5$ and $R_6$ are as defined in claim 1.

**Revendications**

1. Composés répondant à la formule I:

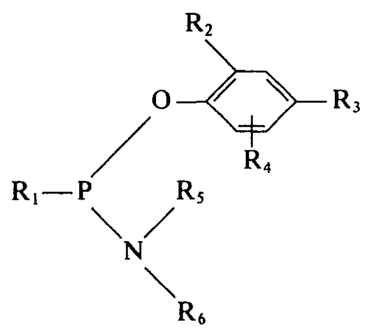

(I)

dans laquelle $R_1$ représente un alkyle en $C_1-C_{18}$, un styryle, un biphénylyle ou un phényle éventuellement porteur d'un à trois radicaux alkyles en $C_1-C_8$ et/ou en position 4, d'un radical dialkylamino dont chacun des alkyles peut contenir de un à douze atomes de carbone, $R_2$ et $R_4$ représentent chacun, indépendamment l'un de l'autre, un alkyle en $C_1-C_{18}$, un cycloalkyle en $C_5-C_{12}$, un phényle, un benzyle, un $\alpha$-méthylbenzyle ou un $\alpha$-$\alpha$-diméthylbenzyle, $R_4$ pouvant en outre représenter l'hydrogène, $R_3$ représente l'hydrogène, un alkyle en $C_1-C_{18}$, un alcoxy en $C_1-C_{18}$, un alcoxycarbonyle en $C_2-C_{19}$, un alcoxycarbonylalkyle en $C_3-C_{24}$ ou un radical phénoxycarbonyle ou phénoxycarbonylalkyle en $C_8-C_{18}$, qui porte éventuellement de 1 à 3 alkyles en $C_1-C_8$, ou $R_3$ représente un phényle, un benzyle, un $\alpha$-méthylbenzyle, un $\alpha$-$\alpha$-diméthylbenzyle, un radical de formule II

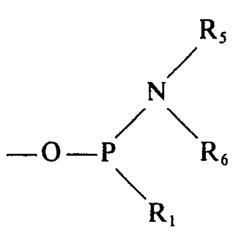

(II)

ou un radical répondant à la formule III

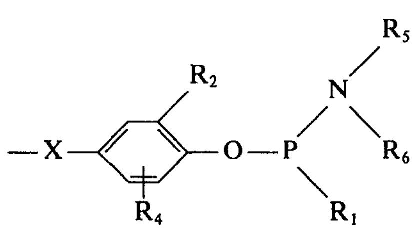

(III)

dans laquelle X représente $-O-$, $-S-$ ou $-(R_7)C(R_8)-$, les symboles $R_7$ et $R_8$ représentant chacun, indépendamment l'un de l'autre, l'hydrogène ou un alkyle en $C_1-C_8$, ou encore $R_3$ et $R_4$ forment ensemble un radical tétraméthyl-1,1,3,3-propylène-1,3 condensé aux positions 4 et 5, et $R_5$ et $R_6$ représentent chacun, indépendamment l'un de l'autre, un alkyle en $C_1-C_{12}$, un oxa-alkyle en $C_2-C_{21}$, un thiaalkyle en $C_2-C_{21}$, un alcényle en $C_3-C_{18}$, un alcynyle en $C_3-C_{18}$, un hydroxy-alkyle en $C_2-C_6$, un alcoxycarbonylalkyle en $C_3-C_{24}$, un cycloalkyle en $C_5-C_{12}$, un aryle en $C_6-C_{14}$, un alkylaryle en $C_7-C_{15}$, un aralkyle en $C_7-C_{15}$ ou un radical pipéridyle-4 répondant à la formule IX

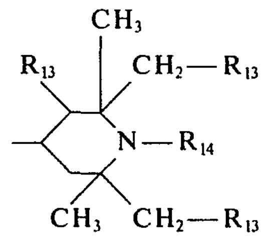

(IX)

dans laquelle $R_{13}$ représente l'hydrogène ou un méthyle, et $R_{14}$ représente l'hydrogène, un oxyle, un alkyle en $C_1-C_{18}$, un alcényle en $C_3-C_{18}$, un alcynyle en $C_3-C_6$, un aralkyle en $C_7-C_{12}$, un alcoxy-alkyle en $C_2-C_{21}$, un acyle aliphatique en $C_1-C_4$ ou un radical $-CH_2COOR_{15}$ dans lequel $R_{15}$ représente un alkyle en $C_1-C_{12}$, un alcényle en $C_3-C_8$, un phényle, un aralkyle en $C_7$ ou $C_8$ ou un cyclohexyle, $R_5$ peut en outre représenter l'hydrogène ou un radical répondant à la formule IV

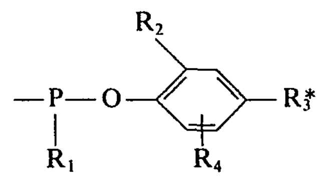

(IV)

dans laquelle $R_1$, $R_2$ et $R_4$ ont les significations précédemment données et $R_3^*$ a la signification qui a été donnée pour $R_3$ mais ne peut pas représenter un radical de formule II ou de formule III, $R_6$ peut en outre représenter un radical répondant à l'une des formules V et VI

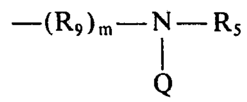

(V)

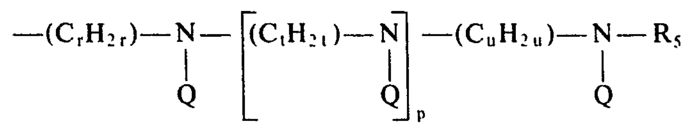

(VI)

dans lequelles a représente un radical de formule IV dans lequel $R_1$, $R_2$, $R_3^*$ et $R_4$ ont les significations indiquées ci-dessus, m est égal à 0 ou à 1, $R_9$ représente un alkylène en $C_2-C_{22}$ éventuellement interrompu par 1 ou 2 atomes d'oxygène ou de soufre, un alcénylène en $C_4-C_{22}$, un alcynylène ou $C_4-C_{22}$, un cyco-alkylène en $C_5-C_9$ ou un radical répondant à la formule VII

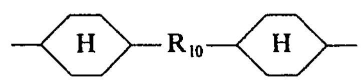

(VII)

dans laquelle $R_{10}$ représente $-O-$, $-S-$ ou un radical $-(R_{11})C(R_{12})-$ dans lequel $R_{11}$ et $R_{12}$ représentent chacun, indépendamment l'un de l'autre, l'hydrogène ou un alkyle en $C_1-C_8$, ou encore $R_{11}$ et $R_{12}$ forment ensemble et avec l'atome de carbone auquel ils sont liés un cycloalkyle en $C_5-C_{12}$, ou encore $R_{11}$ et $R_{12}$ forment ensemble un radical cyclohexylène-1,4 diméthylène ou un radical triméthyl-1,1,3,3 cyclohexylène-1,5, $R_9$ peut en outre représenter un radical phénylène ou biphénylène, r, t, et u représentent chaun, indépendamment les uns des autres, un nombre égal à 2, à 3, à 4, à 5 ou à 6 et p est égal à 0, à 1, à 2 ou à 3, et $R_5$ et $R_6$ dans la formule I peuvent former ensemble, et avec l'atome d'azote auquel ils sont liés, un radical de pyrrolidine, d'oxazolidine, de pipéridine, de morpholine, de pipérazine ou de perhydro-azépine, éventuellement porteur d'un à cinq radicaux méthylo-éthyles, ou un radical de formule VIII.

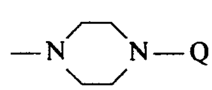

2. Composés de formule I selon la revendication 1, dans lesquels, $R_1$ représente un alkyle en $C_1-C_{18}$, un styryle, ou un phényle éventuellement porteur d'un à trois alkyles en $C_1-C_4$ et/ou en position 4, d'un dialkylamino dont chacun des alkyles contient de 1 à 4 atomes de carbone $R_2$ et $R_4$ représentent chacun, indépendamment l'un de l'autre un alkyle en $C_1-C_8$, un cycloalkyle en $C_5-C_7$, un phényle, un benzyle, un $\alpha$-méthylbenzyle, ou un $\alpha,\alpha$-diméthylbenzyle, $R_4$ pouvant en outre représenter l'hydrogène, $R_3$ représente l'hydrogène, un alkyle en $C_1-C_{12}$, un alcoxy en $C_1-C_8$, un alcoxycarbonyle en $C_2-C_{19}$, un alcoxycarbonyle-méthyle en $C_3-C_{20}$, un alcoxycarbonyl éthyle en $C_4-C_{21}$, un phényle, un benzyle, un $\alpha$-méthylbenzyle, un $\alpha,\alpha$-diméthylbenzyle ou un radical de formule II ou III dans lequel $R_1$, $R_2$ ou $R_4$ ont

les significations indiquées ci-dessus, $R_5$ et $R_6$ ont les significations données ci-dessous, et X représente un radical $-(R_7)C(R_8)$ dans lequel $R_7$ et $R_8$ représentent chacun, indépendamment l'un de l'autre, l'hydrogène ou un méthyle, $R_3$ et $R_4$ peuvent également former ensemble un radical tétraméthyl-1,1,3,3 triméthylène-1,3 condensé aux positions 4 et 5, $R_5$ et $R_6$ représentent chacun, indépendamment l'un de l'autre, un alkyle en $C_1-C_{18}$, un alcényle en $C_3$ ou $C_4$, un alcynyle en $C_3$ ou $C_4$, un alcoxycarbonyle-méthyle en $C_3-C_{20}$, un alcoxycarbonyl-éthyle en $C_4-C_{21}$, un cycloalkyle en $C_5-C_7$, un phényle, un aralkyle en $C_7-C_{15}$, un benzyle ou un radical pipéridyle-4 de formule V ou VI, dans lequel r, t et u sont égaux chacun à 2 ou à 3, p est égal à 0 ou à 1, $R_9$ représente un alkylène en $C_2-C_9$ éventuellement interrompu par 1 ou 2 atomes d'oxygène ou de soufre, un cyclohexylène, un radical de formule VII dans lequel $R_{10}$ représente $-O-$, $-S-$ ou un radical $-(R_{11})C(R_{12})-$ (les symboles $R_{11}$ et $R_{12}$ représentant chacun, indépendamment l'un de l'autre, l'hydrogène ou un méthyle, ou encore $R_{11}$ et $R_{12}$ formant ensemble, et avec l'atome de carbone auxquels ils sont liés un radical cyclohexylène, cyclohexyl-diméthylène-1,4 ou triméthyl-1,3,3 cyclohexylène-1,5), $R_9$ pouvant en outre représenter un radical phénylène.

3. Composés de formule I selon la revendication 1, dans lesquels $R_1$ représente $R_1$ représente un alkyle en $C_1-C_{18}$ ou un phényle, $R_2$ représente un alkyle en $C_4-C_8$, un $\alpha$-méthylbenzyle ou un $\alpha,\alpha$-diméthylbenzyle, $R_4$ représente l'hydrogene ou un alkyle en $C_1-C_8$, $R_3$ représente l'hydrogène, un alkyle en $C_1-C_8$, un alcoxycarbonylméthyle en $C_3-C_{20}$, un alcoxycarbonylméthyle en $C_4-C_{21}$, un $\alpha$-méthylbenzyle ou un $\alpha,\alpha$-diméthylbenzyle, et $R_5$ et $R_6$ représente chacun, indépendamment l'un de l'autre, un alkyle en $C_1-C_{12}$, un allyle, un cyclohexyle, ou un radical tétraméthyl-2,2,6,6 pypéridyle-4, $R_5$ pouvant également représenter l'hydrogène, ou encore $R_5$ ou $R_6$ forment ensemble, et avec l'atome d'azote auquel ils sont liés, un radical de pipéridine, de perhydroazépine ou de morpholine ou un radical de formule VIII dans lequel Q représente un radical de formule IV.

4. Composés de formule I selon la revendication 1, dans lesquels $R_2$ représente un alkyle en $C_4-C_8$ tandis que $R_3$ et $R_4$ représentent chacun l'hydrogène ou un alkyle en $C_1-C_8$.

5. Composés de formule I selon la revendication 1, dans lesquels $R_5$ et/ou $R_6$ représentent un radical de formule IX dans lequel $R_{13}$ désigne l'hydrogène et $R_{14}$ l'hydrogène, un alkyle en $C_1-C_8$, un allyle, un benzyle ou un acétyle.

6. Composés selon la revendication 5, dans lesquels $R_{14}$ représente l'hydrogène, un méthyle ou un acétyle.

7. Matière polymère organique qui a été stabilisée contre l'action de l'oxygène, de la lumière et de la chaleur, matière qui contient un composé de formule I selon la revendication 1.

8. Procédé de préparation des composés de formule I par réaction d'un composé répondant à la formule X

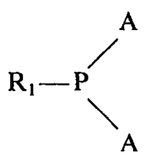

(X)

dans laquelle $R_1$ a la signification donnée à la formule I et A représente un radical réactif, avec un phénol répondant à la formule XI

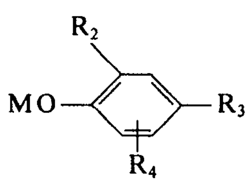

(XI)

dans laquelle $R_2$, $R_3$ et $R_4$ ont les significations données à la revendication 1 et M représente l'hydrogène ou un métal alcalin, et avec une amine répondant à la formule XII

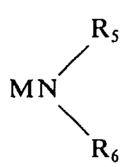

(XII)

dans laquelle M a la signification qui vient d'être donnée tandis que $R_5$ et $R_6$ ont les significations données à la revendication 1.